**Europäisches Patentamt**

**European Patent Office**

**Office européen des brevets**

(11) Publication number:

**0 148 102**

**B1**

(12) **EUROPEAN PATENT SPECIFICATION**

(45) Date of publication of patent specification: **05.09.90**

(21) Application number: **84630192.7**

(22) Date of filing: **12.12.84**

(51) Int. Cl.⁵: **G 05 D 23/24, F 25 B 41/06**

(54) Method and apparatus for controlling refrigerant flow in a refrigeration system.

(30) Priority: **19.12.83 US 562913**

(43) Date of publication of application:
**10.07.85 Bulletin 85/28**

(45) Publication of the grant of the patent:
**05.09.90 Bulletin 90/36**

(84) Designated Contracting States:
**CH DE FR GB IT LI**

(56) References cited:
**EP-A-0 069 996**
**EP-A-0 078 928**
**FR-A-2 333 210**
**FR-A-2 338 466**
**US-A-3 396 550**
**US-A-3 537 272**
**US-A-3 577 743**
**US-A-4 067 203**
**US-A-4 244 182**

(73) Proprietor: **CARRIER CORPORATION**
**Carrier Tower 6304 Carrier Parkway P.O. Box 4800**
**Syracuse New York 13221 (US)**

(72) Inventor: **Schedel, John W.**
**3273 Webb Road**
**Lafayette New York 13084 (US)**
Inventor: **Lord, Richard G.**
**116 Sotherden Drive**
**Liverpool New York 13088 (US)**

(74) Representative: **Waxweiler, Jean et al**
**OFFICE DENNEMEYER S.à.r.l. P.O. Box 1502**
**L-1015 Luxembourg (LU)**

Courier Press, Leamington Spa, England.

## Description

Background of the invention

This invention relates to refrigeration systems wherein the flow of refrigerant from the refrigerant condenser to the refrigerant evaporator is governed by an adjustable expansion valve which is responsive to a temperature condition of the refrigerant to be compressed.

Refrigeration systems must be designed so as to prevent liquid refrigerant from entering the compressor cylinders along with refrigerant vapor because this condition, known as "slugging" or "flooding", can result in serious damage to the compressor. Ideally, the refrigerant expansion valve controls the passage of refrigerant to the evaporator so that all of the refrigerant is evaporated prior to leaving the evaporator. Prior refrigeration systems have frequently controlled the flow of refrigerant through the expansion valve by sensing the refrigerant pressure or equivalent temperature and the temperature of superheated refrigerant leaving the evaporator. This difference in temperature is known in the art as "superheat", and prior systems have usually been designed to require a large safety margin of superheat in the refrigerant leaving the evaporator so as to avoid the slugging condition previously referred to. A large safety margin is required because of previously unaccounted for system variables affecting the actual superheat of refrigerant entering the compressor cylinders and due to the practical difficulties in sensing low refrigerant superheats and the sluggishness of the response of prior expansion valves to changes in refrigerant superheat. This safety margin is provided by utilizing excess evaporator heat exchange surface to assure complete evaporation of the refrigerant or, in other words, by restricting the flow of refrigerant to less than optimum for the heat exchange surface that is present in the system, thereby restricting the capacity of the system for a given energy input.

In many refrigeration systems the refrigerant vapor leaving the evaporator is passed in heat exchange relation with the compressor motor prior to entering the compression section of the compressor so as to cool the motor and to further assure that any liquid refrigerant which accidentally may have reached the compressor due to sluggish control system response is evaporated prior to entering the compressor cylinders. Passing the refrigerant over the compressor motor adds additional superheat to the refrigerant entering the cylinders of the compressor. In prior systems, this additional amount of superheat has not been taken into consideration in adjusting the expansion valve because it is not reflected in the temperature of refrigerant leaving the evaporator, which is the common way in which superheat is sensed.

EP—A—0 069 996 discloses a refrigerant flow control system and method according to the preambles of the independent claims.

The object of the invention is an improved refrigerant flow control system and method.

This object is achieved by the features recited in the characterizing parts of the independent claims. Embodiments of the invention are recited in the dependent claims.

In accordance with the present invention the flow or refrigerant from the condenser to the evaporator is govered by an expansion valve which is controlled in response to the superheat of refrigerant entering the compression section after having passed in heat exchange relation with the compressor motor. This arrangement makes possible more efficient utilization of the evaporator surface because a greater amount of refrigerant may be passed to the evaporator, or a lessor amount of evaporator surface may be designed for a given capacity system, because the superheat may be sensed with greater accuracy and the superheat added to the refrigerant by the compressor motor is taken into consideration in controlling the quantity of refrigerant supplied to the evaporator. In the preferred embodiment, the superheat of the refrigerant is sensed at a point just prior to the entrance of the refrigerant into the cylinders of a reciprocating compressor by a thermistor which provides an electrical analog signal to a microcomputer that rapidly adjusts the position of the expansion valve by providing a digital output signal to a stepper motor which incrementally controls the position of the valve and flow of refrigerant to the evaporator. This arrangement provides very rapid response to changes in superheat so that a relatively low safety margin of superheat may be maintained without danger of slugging the compressor, and a consequent further improvement in capacity and efficiency of the system.

The invention will now be described by way of example with reference to the accompanying drawings, wherein:

Figure 1 is a schematic illustration of a refrigeration system, and its associated control, embodying the present invention.

Figure 2 is an illustration, partly in cross-section, of a refrigeration compressor having a temperature sensor at a preferred location for measuring superheat.

Figure 3 is a flow chart illustrating the basic logic embodied in a microprocessor based control which embodies the present invention.

Description of a preferred embodiment

This invention will be described with reference to a refrigeration system, commonly called a water or brine chiller, which uses an air cooled condenser, a reciprocating compressor and an evaporator such as a chiller vessel for directly expanding refrigerant in heat exchange with water or brine being chilled. However, it will be understood that the invention is equally applicable to heat pumps, or to machines whose primary purpose is to provide heating or which utilize liquid cooled condensers or other types of hermetic compressors. Also, while the invention will be described with respect to a direct expansion evaporator vessel for chilling water or brine on the exterior of the heat exchange tubes therein, the system may employ a flooded evaporator having the refrigerant on the outside of the tubes or an evaporator for directly cooling air or other fluids. Furthermore, a system of the type described may, in practice actually employ one or more chiller vessels, compressors, and condensers arranged in parallel or staged refrigerant circuits to provide the desired refrigeration or heating capacity. Also, the invention will be described with reference to the preferred microprocessor based control system driving an electrically actuated stepper valve motor, but it will be understood that mechanical, electrical, pneumatic or other controls may be used within the scope and spirit of the invention.

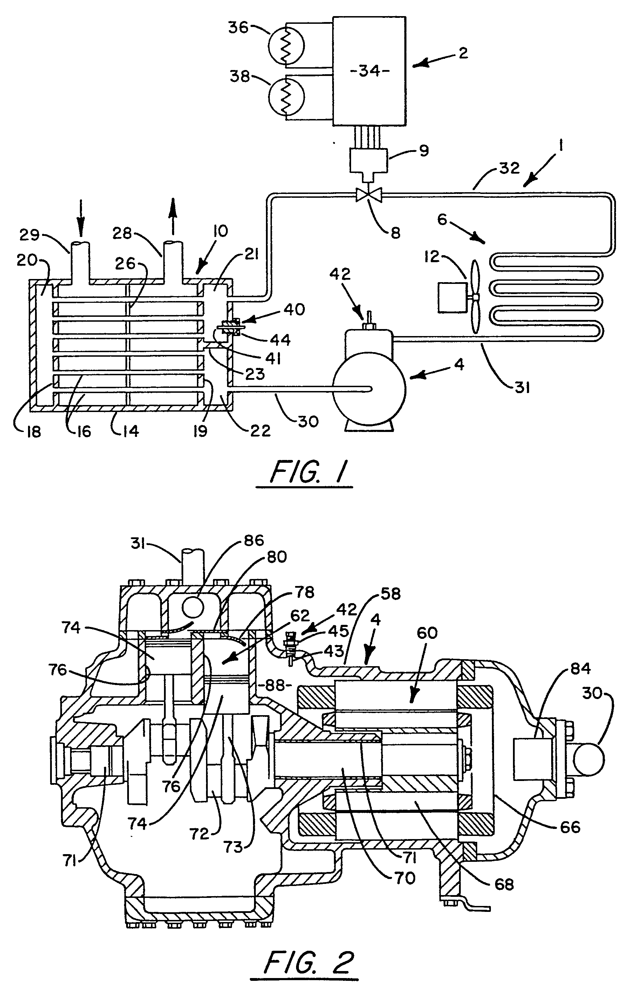

Referring particularly to Figure 1, there is illustrated a refrigeration system 1 having a control 2. Refrigeration system 1 comprises a reciprocating compressor 4, an air cooled condenser 6 having a motor driven fan 12 for passing air over the tubes of the condenser, refrigerant expansion valve 8 controlled by motor 9, and an evaporator 10. Evaporator 10 comprises a cylindrical vessel having a shell 14 with tube sheets 18 and 19 disposed adjacent the ends thereof supporting a plurality of heat exchange tubes 16. Tube sheet 18 is spaced from one end of the evaporator vessel to form a refrigerant header 20. Tube sheet 19 is spaced from the other end of the evaporator vessel and together with horizontal partition 23 forms a refrigerant inlet header 21 and a refrigerant outlet header 22. One or more internal baffles 26 are usually provided within shell 14 for directing the water or brine to be chilled in a desired path within the interior of the vessel for effective heat transfer with heat exchange tubes 16.

In operation, refrigerant vapor is withdrawn from refrigerant outlet header 22 of evaporator 10 through suction passage 30 by compressor 4. The refrigerant vapor is compressed in compressor 4 and passed through hot gas passage 31 into condenser 6 where the refrigerant is condensed to a liquid by heat exchange with a cooling medium such as air. The liquid refrigerant passes through liquid passage 32, having expansion valve 8 therein, into the refrigerant inlet header 21 of evaporator 10. The expanded low pressure refrigerant flows from header 21 through a portion of heat exchange tubes 16 into refrigerant header 20, from which it enters the remaining heat exchange tubes 16 and passes to refrigerant outlet header 22. The refrigerant passing through heat exchange tubes 16 evaporates therein and cools the water admitted into the evaporator vessel through warm water inlet passage 28. The water which has been cooled in the evaporator vessel then passes to a desired location through chilled water outlet passage 29 to provide cooling at a desired location.

Control system 2 comprises, in its preferred form, a microcomputer 34 having suitable microprocessor, memory, input/output and power switching devices to control a digitally controllable electric stepper motor 9, which in turn incrementally adjusts the opening and closing of expansion valve 8 to incrementally control the flow of refrigerant from condenser 6 to evaporator 10. Microcomputer 34 acquires analog temperature input signals from thermistors 36 and 38 and processes those input signals to generate a digital output signal to actuate stepper motor 9. A suitable microcomputer controlled expansion valve and associated stepper motor are more fully described in our copending application serial number (Attorney Docket No. 5414).

Thermistor 36 is a part of evaporator probe assembly 40 which is located in the refrigerant inlet header of evaporator 10, or some other suitable location for sensing the saturated refrigerant temperature in the evaporator. Probe assembly 40 comprises a probe 41 containing thermistor 36 which is suitably inserted via a bushing and seal assembly 44 into refrigerant inlet header 21 to sense the temperature of refrigerant entering the evaporator. This temperature corresponds to the saturation temperature of the expanded refrigerant, prior to complete evaporation of the liquid refrigerant within heat exchange tubes 16. Thermistor 38 is a part of compressor probe assembly 42 which senses a refrigerant temperature at a desired location within the shell of compressor 4.

Referring now to Figure 2, compressor 4 is shown in more detail. Compressor 4 may of the hermetic or semi-hermetic variety, and includes a compressor housing 58 such as a cast or drawn shell. Housing 58 encloses an electric motor means 60 which is illustrated as being of the induction type, and a compression means 62 which is illustrated as being of the reciprocating type. Electric motor means 60 has a plurality of stator windings 66 and a squirrel cage rotor member 68 connected to a rotor shaft 70 for imparting torque to crank shaft 72 which is journaled in bearings 71 supported by housing 58. Compression means 62 comprises one or more cylinders 76 within which are disposed a like number of pistons 74. Pistons 74 are connected to crank shaft 72 by connecting rods 73 which reciprocate the pistons within the cylinders to compress refrigerant vapor. Refrigerant vapor is admitted to the cylinders through refrigerant suction valves 78 and is discharged from the cylinders through refrigerant discharge valves 80 associated with each of the cylinders.

A refrigerant suction inlet passage 84 is provided to admit refrigerant into the compressor from suction passage 30 and a compressed refrigerant vapor outlet passage 86 is provided to discharge compressed refrigerant into hot gas passage 31 of the refrigeration system. Cold refrigerant gas from evaporator 6 passes into compressor 4 from suction passage 30 through refrigerant vapor inlet 84, and passes in heat exchange relation with motor 60 to cool the motor. The refrigerant vapor passing in heat exchange relation with motor 60 absorbs heat from the motor and then passes through suction manifold 88 into the cylinders of compression means 62. Suction manifold 88 provides a refrigerant vapor passage which lies downstream of electric motor 60 and upstream of suction valves 78 and compressor cylinders 76. The refrigerant vapor entering suction manifold 88 has therefore absorbed additional superheat from motor 60 prior to entering cylinders 76 of the compression means. The refrigerant vapor entering cylinders 76 is compressed by reciprocation of pistons 74 and the compressed refrigerant then passes through refrigerant discharge valves 80 into refrigerant outlet passage 86, from which it passes through hot gas passage 31 to condenser 6.

Compressor probe assembly 42 is preferably located in suction manifold 88 and comprises a suitable bushing and seal assembly 45 having temperature probe 43 extending into suction manifold 88. Thermistor 38 is located in probe 43 and senses the temperature of the superheated refrigerant vapor passing downstream of motor means 60 after having passed in heat exchange relation with motor 60 and prior to entry of the refrigerant vapor into cylinders 76 of compression means 62. At this point, the refrigerant vapor in thoroughly mixed and substantially homogeneous so that an accurate indication of superheat may be obtained. Probe 43 may be alternatively located at any other suitable location within compressor shell 58 so that it senses the temperature of refrigerant vapor which has been superheated by heat exchange with motor 60 prior to its entry into compression means 62.

In the preferred embodiment of this invention thermistors 36 and 38 generate analog electrical temperature signals which are processed by microcomputer 34 to provide a digital output to an electric stepping motor which incrementally controls the position of expansion valve 8. Alternatively any temperature sensitive resistance or other element may be employed instead of the thermistors to sense the required temperatures or pressures equivalent thereto.

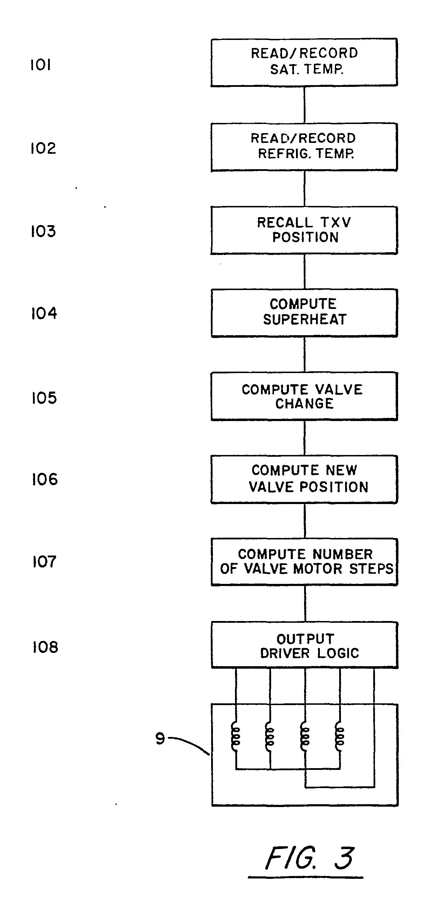

Figure 3 illustrates a flow diagram of a basic program for accomplishing the signal processing. In step 101 the temperature sensed by thermistor 36, which corresponds to refrigerant saturation temperature in the evaporator, is read and recorded as temperature t1. In step 102 the temperature sensed by thermistor 38 is read and recorded as superheated refrigerant temperature t2. In step 103 the absolute present position of the expansion valve is recalled from memory and inputted into the microprocessor. In step 104 the superheat of the refrigerant entering the compression means, sensed by thermistor 38, is computed by subtracting t1 from t2. In step 105 a suitable valve opening and closing algorithm is computed to generate a valve change or error signal for opening and closing of expansion valve 8. The particular algorithm may be imperically determined as a function of the desired superheat to be maintained and the characteristics of the refrigeration system and of the valve and its associated stepper motor. For example, it may be desired to maintain approximately 15°F of superheat in the refrigerant entering the compression means of the system and therefore, $t2-t1-15°$ should desirably equal zero. For values of $t2-t1-15°$ which differ from zero the deviation may be adjusted by various system functions to derive a valve change signal for opening or closing the valve to the desired position to restore the superheat to 15°F. It will be appreciated that various characteristics of the system can be taken into consideration in generating the valve change signal, including the non-linear flow characteristics of the valve, and the rate at which it is desired that the valve adjust the refrigerant flow for a given deviation from the desired superheat. Also, other sensed parameters of the system may be supplied to the microcomputer to override or modify the valve change signal derived from the sensed superheat, such as an excess or insufficient system pressure, an excess system temperature, excess motor current, system load changes and other conditions which may require a modification of the refrigerant flow.

In step 106 the system logic computes the new expansion valve position which is desired from the present valve position recalled in step 103 and the valve change signal derived from step 105. For example, stepper motor 9 may be a bipolar electric stepper providing 760 steps between the completely closed valve position and the completely open valve position. At some point in the operation of the refrigeration system the valve may be completely closed to establish a zero reference position for the valve. Thereafter the microcomputer remembers the absolute position of the valve as each valve change signal is applied to the stepper motor to open or close the valve from its previous position. In step 107 the logic computes the number of valve motor steps which should be added or subtracted from the current position of the valve in order to provide the desired refrigerant flow to the evaporator. This output signal which is generated by the microprocessor is then applied to a suitable output driver logic stage 108 which applies a digital output signal to pulse the appropriate windings of stepper motor 9 to cause it to incrementally open or close expansion valve 8 by the desired number of steps.

While a digitally controllable electric stepper motor controlled expansion valve is illustrated as being the preferred embodiment of this invention, expansion valve 8 may be adjusted by any suitable valve actuator means coupled with an appropriate control system responsive to the sensed superheat condition. However, an electric stepper motor controlled expansion valve is particularly advantageous because of the precision and rapidity of its response and because it is especially well adapted to control by a microcomputer which may set a precise desired position of the valve in accordance with all sensed and determined system characteristics.

However, mechanical, electrical, pneumatic and other systems of control may be utilized to control the position of the expansion valve in response to a superheat signal which is derived from refrigerant passing from the motor means into the compression means of the refrigerant compressor, so as to take into account the superheat added by heat exchange of the refrigerant with the compressor motor.

By taking into account the superheat added to refrigerant vapor by the compressor motor it is possible to operate the refrigeration system with a smaller amount of superheat in the refrigerant leaving the evaporator without the danger of refrigerant liquid entering the compression means where it may cause damage. This is advantageous because it is possible to design the evaporator with a smaller amount of heat exchange surface due to the fact that less superheat is required to be added by the evaporator. Furthermore, much more accurate control of the refrigerant flowing through the system is possible by sensing the superheat at the critical location in the system between the motor and compression sections of the compressor. Previously, the amount of superheat required to be provided by the evaporator was more or less of an approximation based on assumptions concerning the safe superheat of refrigerant entering the compressor rather than the actual superheat of refrigerant entering the compression section. To ensure safe operation of the system, a very large safety factor was necessary, resulting in the system generally operating with greatly excess superheat under most conditions.

Applicants invention enables this superheat to be more precisely determined and the refrigerant flow quickly corrected in the event of any abnormal or other changes in operating conditions which causes the superheat of the refrigerant entering the compression means to deviate from that anticipated by design assumptions. Consequently, the system may be designed to operate safely with a much smaller margin of excess superheat. Furthermore, it is difficult to reliably sense or measure low values of superheat. Consequently, the measurement of superheat at the outlet of the evaporator, which may desirably be on the order of less than 5°F, further contributes to the necessity of a large safety factor to prevent flooding of the compressor with refrigerant liquid. However, in accordance with Applicant's invention the superheat of the refrigerant is sensed at a point within the compressor where it enters the compression section, at which point the superheat is relatively high, as on the order of 15°F, and it can be easily measured with satisfactory accuracy. This ability to more accurately sense the actual superheat enables a further reduction in the necessary superheat safety factor. By use of the preferred digitally controlled expansion valve, the changes in refrigerant flow may be accomplished with far greater accuracy and speed than prior systems, thereby further enabling a lower margin of safety in the superheat of the refrigerant leaving the evaporator. Consequently, this invention enables the evaporator heat exchange surface to be significantly reduced, or a given evaporator to safely provide a greater refrigeration capacity for a given energy input than previous systems, due to the precision and speed with which refrigerant flow in the system is controlled. That, in turn, enables the refrigeration system to have a lower initial cost, a higher capacity and increased energy efficiency.

It will be appreciated that this invention may be otherwise embodied within the scope of the following claims.

**Claims**

1. A refrigeration system comprising:
(A) an evaporator (10) for evaporating liquid refrigerant to provide cooling;
(B) a condenser (6) for condensing refrigerant vapor;
(C) a compressor (4) for compressing refrigerant vapor formed in the evaporator (10) and for passing the compressed refrigerant vapor to the condenser (6), said compressor (4) including a housing (58), compression means (4; 62) disposed within said housing for compressing refrigerant vapor, motor means (60) disposed within said housing for driving said compression means;
(D) an adjustable refrigerant expansion valve (8) for controlling flow of refrigerant from the condenser to the evaporator; and
(E) control means (2) for adjusting the refrigerant expansion valve (8) in response to a function of the temperature of the refrigerant, characterized by refrigerant passage means (84, —, 88) within said housing for passing refrigerant vapor through said housing (58) in heat exchange relation with said motor means (60) to said compression means (62), to cool said motor means prior to passing into the compression means;
(F) a temperature sensor (42) disposed in said housing (58) at a location (88) in said refrigerant passage means (84, —, 88) for sensing the temperature of the refrigerant entering said compression means (62), the output signal of said temperature sensor being fed to said control means (2) whereby the refrigerant expansion valve (8) is adjusted as a function of the temperature of the refrigerant passing from said motor means (60) into said compression means (62).

2. The refrigeration system as defined in claim 1 wherein the control means (2) comprises means for adjusting the refrigerant expansion valve in response to a function of the superheat of the refrigerant entering said compression means (62).

3. The refrigeration system as defined in claim 1, wherein said control means comprises:
a second temperature sensor (40) disposed at a location in said system for sensing a first temperature corresponding with the saturation temperature of refrigerant in said evaporator; and signal processing means (34) connected for providing a superheat control signal to said expansion valve (8) which is a function of the difference between the temperature of the refrigerant entering the compression means (62) and said second sensed temperatures; and

a valve motor (9) connected to said adjustable refrigerant expansion valve (8) for adjusting the refrigerant expansion valve in response to the superheat control signal generated by said signal processing means;

4. The refrigeration system as defined in claim 3 wherein:

(A) said temperature sensors (42, 40) comprise temperature sensitive elements for providing analog electrical temperature signals;

(B) said signal processing means (834) comprises a microcomputer programmed and connected to provide a digital superheat control signal to said valve motor (9) in response to said analog temperature signals; and

(C) said valve motor (9) comprises a digitally controllable electric stepper motor which is actuated in response to the digital superheat control signal generated by said microcomputer, to incrementally adjust the refrigerant expansion valve in response to the digital superheat control signal.

5. A method of controlling the flow of refrigerant in a refrigeration system having a condenser (6), an adjustable refrigerant expansion valve (8), an evaporator (10) and a compressor (4), wherein the compressor includes a compressor housing (58) enclosing a compressor motor (60) and a compression means (62) driven by the compressor motor, which comprises the steps of:

generating a control signal which is a function of a sensed refrigerant temperature; and

controlling the passage of refrigerant from the condenser (6) to the evaporator (10) of said refrigeration system by adjusting the refrigerant expansion valve (8) in response to said control signal, characterized by the steps of:

passing refrigerant from the evaporator (10) in heat exchange relation with the compression motor (60) to cool the motor prior to passing the refrigerant into the compression means (62); and

sensing the temperature of the refrigerant passing through the compressor housing (58) from the compressor motor (60) into the compression means (62) for generating said control signal.

6. The method of controlling the flow of refrigerant in a refrigeration system as defined in claim 5, wherein the step of generating a control signal comprises generating a control signal which is a function of the superheat of refrigerant passing from the compressor motor into the compression means.

7. The method of controlling the flow of refrigerant in a refrigeration system as defined in claim 5, wherein:

the step of generating a valve control signal comprises generating a digital control signal; and the step of controlling the passage of refrigerant from the condenser to the evaporator comprises incrementally adjusting the refrigerant expansion valve in response to the digital valve control signal.

8. The method of controlling the flow of refrigerant in a refrigeration system as defined in claim 5, which comprises the steps of:

sensing a second temperature in said system corresponding with the saturation temperarure of refrigerant in the evaporator (16), and generating a second temperature signal which is a function of said second temperature;

generating a valve control signal which is a function of the difference in a signal corresponding to the temperature of the refrigerant passing into the compressor and a second temperature signal; and

controlling the passage of refrigerant from the condenser (6) to the evaporator (10) of the refrigeration system by adjusting the refrigerant expansion valve (8) in response to the valve control signal.

9. The method of controlling the flow of refrigerant in a refrigeration system as defined in claim 8, wherein:

the step of generating a superheat control signal comprises generating a digital superheat control signal; and

the step of controlling the passage of refrigerant from the condenser (6) to the evaporator (10) comprises incrementally adjusting the refrigerant expansion valve (8) in response to the digital superheat control signal.

**Patentansprüche**

1. Kälteanlage, mit:

(A) einem Verdampfer (10) zum Verdampfen von flüssigem Kältemittel, um für Kühlung zu sorgen;

(B) einem Kondensator (6) zum Kondensieren von Kältemitteldampf;

(C) einem Kompressor (4) zum Komprimieren von Kältemitteldampf, der in dem Verdampfer (10) gebildet wird, und zum Leiten des komprimierten Kältemitteldampfes zu dem Kondensator (6), wobei der Kompressor (4) ein Gehäuse (58) aufweist, eine Kompressionseinrichtung (4; 62), die in dem Gehäuse angeordnet ist, zum Komprimieren des Kältemitteldampfes, und eine Motoreinrichtung (60), die in dem Gehäuse angeordnet ist, zum Antrieben der Kompressionseinrichtung;

(D) einem einstellbaren Kältemittelexpansionsventil (8) zum Steuern der Strömung von Kältemittel aus dem Kondensator zu dem Verdampfer; und

(E) einer Steuereinrichtung (2) zum Einstellen des Kältemittelexpansionventils (8) als Funktion der Temperatur des Kältemittels,

gekennzeichnet durch eine Kältemittelleiteinrichtung (84, —, 88) innerhalb des Gehäuses zum Leiten vof Kältemitteldampf durch das Gehäuse (58) in Wärmeaustauschbeziehung mit der Motoreinrichtung (60) zu der Kompressionseinrichtung (62), um die Motoreinrichtung zu kühlen, bevor er in die Kompressionseinrichtung geleitet wird;

(F) einen Temperatursensor (42), der in dem Gehäuse (58) an einer Stelle (88) in der Kältemitteilteleiteinrichtung (84, —, 88) zum Erfassen der Temperatur des Kältemittels, das in die Kompressionseinrichtung (62) eintritt, angeordnet ist, wobei das Ausgangssignal des Temperatursensors der Steuereinrichtung (2) zugeführt wird, wodurch das Kältemittelexpansionsventil (8) als Funktion der Temperatur des Kältemittels eingestellt wird, das von der Motoreinrichtung (60) aus in die Kompressionseinrichtung (62) geleitet wird.

2. Kälteanlage nach Anspruch 1, wobei die Steuereinrichtung (2) eine Einrichtung aufweist zum Einstellen des Kältemittelexpansionsventils als Funktion der Überhitzung des Kältemittels, das in die Kompressionseinrichtung (62) eintritt.

3. Kälteanlage nach Anspruch 1, wobei die Steuereinrichtung aufweist:

einen zweiten Temperatursensor (40), der an einer Stelle in der Anlage angeordnet ist, um eine erste Temperatur zu erfassen, die der Sättigungstemperatur des Kältemittels in dem Verdampfer entspricht; und

eine Signalverarbeitungseinrichtung (34), die so angeschlossen ist, daß sie ein Überhitzungssteuersignal an das Expansionsventil (8) abgibt, welches eine Funktion der Differenz zwischen der Temperatur des in die Kompressionseinrichtung (62) eintretenden Kältemittels und der zweiten erfaßten Temperaturen ist; und

einen Ventilmotor (9), der mit dem einstellbaren Kältmittelexpansionventil (8) verbunden ist, zum Einstellen des Kältemittelexpansionsventils aufgrund des Überhitzungssteuersignals, das durch die Signalverarbeitungseinrichtung erzeugt wird.

4. Kälteanlage nach Anspruch 3, wobei:

(A) die Temperatursensoren (42, 40) temperaturempfindliche Elemente zum Erzeugen von analogen elektrischen Temperatursignalen aufweisen;

(B) die Signalverarbeitungseinrichtung (34) einen Mikrocomputer aufweist, der so programmiert und angeschlossen ist, daß er ein digitales Überhitzungssteuersignal an den Ventilmotor (9) aufgrund der analogen Temperatursignale abgibt; und

(C) der Ventilmotor (9) einen digital steuerbaren elektrischen Schrittmotor aufweist, der aufgrund des digitalen Überhitzungssteuersignals betätigt wird, welches durch den Mikrocomputer erzeugt wird, um das Kältemittelexpansionsventil aufgrund des digitalen Überhitzungssteuersignals inkrementell einzustellen.

5. Verfahren zum Steuern der Strömung von Kältemittel in einer kälteanlage mit einem Kondensator (6), einem einstellbaren Kältemittelexpansionsventil (8), einem Verdampfer (10) und einem Kompressor (4), wobei der Kompressor ein Kompressorgehäuse (58) aufweist, das einen Kompressormotor (60) und eine durch den Kompressormotor angetriebene Kompressionseinrichtung (62) enthält, welches folgende Schritte beinhaltet.

Erzeugen eines Steuersignals, welches eine Funktion einer erfaßten Kältemitteltemperatur ist; und

Steuern des Leitens von Kältemittel aus dem Kondensator (6) zu dem Verdampfer (10) der Kälteanlage durch Einstellen des Kältemittel expansionsventils (8) aufgrund des Steuersignals, gekennzeichnet durch folgende Schritte:

Leiten des Kältemittels aus dem Verdampfer (10) in Wärmeaustauschbeziehung mit dem Kompressormotor (60), um den Motor zu kühlen, bevor das Kältemittel in die Kompressionseinrichtung (62) geleitet wird; und

Erfassen der Temperatur des Kältemittels, das durch das Kompressorgehäuse (58) von dem Kompressormotor (60) aus in die Kompressionseinrichtung (62) geleitet wird, zum Erzeugen des Steuersignals.

6. Verfahren zum Steuern der Strömung von Kältemittel in einer Kälteanlage nach Anspruch 5, wobei der Schritt des Erzeugens eines Steuersignals beinhaltet, ein Steuersignal zu erzeugen, welches eine Funktion der Überhitzung des Kältemittels ist, das von dem Kompressormotor aus in die Kompressionseinrichtung geleitet wird.

7. Verfahren zum Steuern der Strömung von Kältemittel in einer Kälteanlage nach Anspruch 5, wobei:

der Schritt des Erzeugens eines Ventilsteuersignals beinhaltet, ein digitales Steuersignal zu erzeugen; und

der Schritt des Steuerns des Leitens von Kältemittel aus dem Kondensator zu dem Verdampfer beinhaltet, das Kältemittelexpansionsventil aufgrund des digitalen Ventilsteuersignals inkrementell einzustellen.

8. Verfahren zum Steuern der Strömung von Kältemittel in einer Kälteanlage nach Anspruch 5, welches die Schritte beinhaltet:

Erfassen einer zweiten Temperatur in der Anlage, welche der Sättigungstemperatur des Kältemittels in dem Verdampfer (16) entspricht, und Erzeugen eines zweiten Temperatursignals, welches eine Funktion der zweiten Temperatur ist;

Erzeugen eines Ventilsteuersignals, welches eine Funktion der Differenz zwischen einem Signal, welches der Temperatur des Kältemittels entspricht, das in den Kompressor geleitet wird, und einem zweiten Temperatursignal ist; und

Steuern des Leitens des Kältemittels aus dem Kondensator (6) zu dem Verdampfer (10) der Kälteanlage durch Einstellen des Kältemittelexpansionsventils (8) aufgrund des Ventilsteuersignals.

9. Verfahren zum Steuern der Strömung von Kältemittel in einer Kälteanlage nach Anspruch 8, wobei:

der Schritt des Erzeugens eines Überhitzungssteuersignals beinhaltet, ein digitales Überhitzungssteuersignal zu erzeugen; und

der Schritt des Steuerns des Leitens des Kältemittls aus dem Kondensator (6) zu dem Verdampfer (10) beinhaltet, das Kältemittelexpansionsventil (8) aufgrund des digitalen Überhitzungssteursignals inkrementell einzustellen.

## Revendications

1. Système frigorifique comprenant:

A) Un évaporateur (10) pour évaporer le frigorigène liquide et assurer un refroidissement;

B) Un condenseur (6) pour condenser le frigorigène vapeur;

C) un compresseur (4) pour comprimer le frigorigène vapeur formé dans l'évaporateur (10) et pour faire passer le frigorigène vapeur comprimé vers le condenseur (6), ledit compresseur (4) comprenant un boîtier (58), des moyens de compression (4, 62) disposés dans ledit boîtier pour comprimer le frigorigène vapeur, des moyens du type moteur (60) disposés dans ledit boîtier pour entraîner lesdits moyens de compression;

D) une vanne réglable de détente (8) du frigorigène pour régler le débit de frigorigène allant du condenseur à l'évaporateur; et

E) des moyens de commande (2) pour régler la vanne de détente vite du frigorigène en réponse à une fonction de la température du frigorigène,

caractérisé par des moyens de passage de frigorigène (84, 88) dans ledit boîtier pour faire passer le frigorigène vapeur par ledit boîtier (58) en relation d'échange thermique avec lesdits moyens de type moteur (60) vers lesdits moyens de compression (62) pour refroidir lesdits moyens du type moteur avant de passer vers les moyens de compression;

F) un capteur de température (42) disposé dans ledit boîtier (58) en un point (88) desdits moyens de passage (84, 88) de frigorigène, pour capter la température du frigorigène entrant dans lesdits moyens de compression (62), le signal de sortie dudit capteur de température étant amené auxdits moyens de commande (2), de sorte que la vanne de détente (8) du frigorigène soit réglée en fonction de la température du frigorigène passant desdites moyens du type moteur (60) vers les moyens du type compression (62).

2. Système frigorifique tel que défini à la revendication 1 dans lequel les moyens de commande (2) comprennent des moyens pour régler la vanne de détente du frogorigène en réponse à une fonction de la surchauffe du frigorigène entrant lesdits moyens de compression (62).

3. Système frigorifique tel que défini à la revendication 1 dans lequel lesdits moyens de commande comprennent:

un deuxième capteur de température (40) disposé en un endroit dudit système pour capter une première température correspondant à la température de saturation du frigorigène dans ledit évaporateur; et des moyens (34) de traitement de signaux reliés pour fournir un signal de commande de surchauffe à ladite vanne détente (8) qui est une fonction de la différence entre la température du frigorigène entrant dans les moyens de compression (62) et lesdites secondes températures captées; et

un moteur de vanne (9) reliée à ladite vanne réglable (8) de détente du frigorigène pour régler la vanne d'expansion du frigorigène en réponse au signal de commande de surchauffe fourni par lesdits moyens de traitement de signaux.

4. Le système frigorifique tel que défini à la revendication 3 dans lequel:

A) lesdits capteurs de température (42, 40) comprennent des éléments thermosensibles pour fournir des signaux électriques et analogiques de température;

B) lesdits moyens de traitement de signaux (34) comprennent un microcalculateur programmé et monté pour fournir un signal numérique de commande de surchauffe audit moteur de vanne (9) en réponse auxdits signaux analogiques de température; et

C) ledit moteur de vanne (9) comprend un moteur électrique pas-à-pas à commande numérique, qui est commandé en réponse aux signaux numériques de commande de surchauffe fourni par ledit microcalculateur pour régler par incréments la vanne de détente du frigorigène en réponse aux signaux numériques de commande de surchauffe.

5. Procédé de commande et de rélage du débit de frigorigène dans un système frigorifique possédant un condenseur (6), une vanne réglable (8) de détente du frigorigène, un évaporateur (10) et un compresseur (4) dans lequel le compresseur comprend un boîtier de compresseur (58) enfermant le moteur du compresseur (60) et des moyens de compression (62) entraînés par le moteur du compresseur, procédé qui comprend les étpes suivantes:

création de signaux de commande en fonction d'une température captée du frigorigéne; et

commande et réglage du passage du frigorigène du condenseur (6) vers l'évaporateur (10) dudit système frigorifique en réglant la vanne (8) de détente du frigorigène en réponse auxdits signaux de commande et de réglage,

procédé caractérisé par les étape suivantes:

passage du fluide frigorifique issu de l'évaporateur (10) en relation d'échange thermique avec le moteur de compression (60) pour refroidir le moteur avant de faire passer le frigorigène dans les moyens de compression (62); et

détection de la témperature du frigorigène passant dans le boîtier du compresseur (58) en provenance du moteur du compresseur (60) vers les moyens de compression (62) pour fournir lesdits signaux de commande et de réglage.

6. Procédé de commande et de réglage du débit de frigorigène dans un système frigorifique tel que défini à la revendication 5, procédé dans lequel l'étape de création de signaux de commande et de réglage comprend la création de signaux de commande et de réglage en fonction de la surchauffe du frigorigène passant du moteur du compresseur vers les moyens de compression.

7. Procédé de commande et de réglage du débit de frigorigène dans un système frigorifique tel que défini à la revendication 5, dans lequel:

l'étape de création de signaux de commande et de réglage de vanne comprend la création de signaux numériques de commande et de réglage; et

l'étape de commande et de réglage du passage fluide frigorifique du condenseur vers l'évaporateur comprend le réglage par incréments de la vanne de détente du frigorigène en réponse aux signaux numériques de commande et de réglage de vanne.

8. Procédé de commande et de réglage du débit de frigorigène dans un système frigorifique tel que défini à la revendication 5 comprenant les étapes suivantes:

détection d'une seconde température dans ledit système correspondant à la température de saturation du frigorigène dans l'évaporateur (16) et création de seconds signaux de température en fonction de ladite second température; et

création d'un signal de commande et de réglage de vanne en fonction de la différence entre un signal correspondant à la températaure du frigorigène passant dans la compresseur et un signal de seconde température; et

commande et réglage du passage de frigorigène du condenseur (6) vers l'évaporateur (10) du système frigorifique, en réglant la vanne (8) de détente du frigorigéne en réponse aux signaux de commande et de réglage de vanne.

9. Procédé de commande et de réglage du débit de frigorigène dans un système de frigorifique tel que défini à la revendication 8, dans lequel;

l'étape de création de signaux de commande surchauffe comprend la création d'un signal numérique de commande et de réglage de sur chauffe; et

l'étape de commande et de réglage du passage du frigorigène du condenseur (6) vers l'évaporateur (10) comprend le réglage par incrément de la vanne de détente du frigorigène en réponse aux signaux numériques de commande et de réglage de la surchauffe.

EP 0 148 102 B1

_FIG. 1_

_FIG. 2_

1

| 101 | READ/RECORD SAT. TEMP. |
|---|---|
| 102 | READ/RECORD REFRIG. TEMP. |
| 103 | RECALL TXV POSITION |
| 104 | COMPUTE SUPERHEAT |
| 105 | COMPUTE VALVE CHANGE |
| 106 | COMPUTE NEW VALVE POSITION |
| 107 | COMPUTE NUMBER OF VALVE MOTOR STEPS |
| 108 | OUTPUT DRIVER LOGIC |

9

*FIG. 3*